# EUROPÄISCHE PATENTANMELDUNG

(11) **EP 3 252 929 A1**
(43) Veröffentlichungstag der Anmeldung: **06.12.2017**
(21) Anmeldenummer: 16190116.0
(22) Anmeldetag: 22.09.2016
(51) Int. Cl.: H02K 5/00, H02K 9/19, H02K 9/22, H02K 11/33

(54) **ELEKTRISCHE ROTIERENDE MASCHINE**

(30) Priorität: 01.06.2016 DE 102016209602
(71) Anmelder: Siemens Aktiengesellschaft, 80333 München (DE)
(72) Erfinder: Burghard, Matthias Johannes, 12099 Berlin (DE)

(57) **Zusammenfassung**

Die Erfindung betrifft eine elektrische rotierende Maschine (2) mit einem Rotor (4), einem Stator (6), der radial außerhalb des Rotors (4) angeordnet ist, einem Maschinengehäuse (8), in dem der Rotor (4) und der Stator (6) aufgenommen sind, sowie mehreren Umrichtern (16). Im Hinblick auf eine platzsparende Lösung wird vorgeschlagen, dass die Umrichter (16) radial außerhalb des Stators (6) und innerhalb des Maschinengehäuses (8) angeordnet sind.

## Beschreibung

Die Erfindung betrifft eine elektrische rotierende Maschine mit einem Rotor, einem Stator, der radial außerhalb des Rotors angeordnet ist, einem Maschinengehäuse, in dem der Rotor und der Stator aufgenommen sind, sowie mehrere Umrichter.

Darüber hinaus betrifft die Erfindung ein Fahrzeug, insbesondere ein Unterseeboot, mit mindestens einer derartigen elektrischen rotierenden Maschine.

Umrichtergespeiste Drehfeldmaschinen, insbesondere für den Propulsionsantrieb eines Unterseeboots, sind beispielsweise aus den Druckschriften EP 0194433 B1 und WO 2004/068694 A1 bekannt. Zur Erzielung eines kompakten Antriebs ist der Läufer dabei als Glockenläufer ausgestaltet. Der Innenraum des Glockenläufers wird zur Aufnahme von Wechselrichtern, die zur Leistungseinspeisung für die Statorwicklungen dienen, verwendet. Bei einer Erhöhung der Leistung der elektrischen rotierenden Maschine ist unter Verwendung weiterer Umrichter hierbei durch die erhöhte Anzahl an Umrichtern ein größerer Durchmesser des Maschinengehäuses erforderlich.

Alternativ sind auch Ausführungen bekannt, bei denen die Umrichter in großen Schaltschränken an der Seite des elektrischen Motors untergebracht sind. Dies führt jedoch gegenüber der erstgenannten Lösung zu einem deutlich höheren Platzbedarf sowie einer wesentlich schlechteren elektromagnetischen Verträglichkeit und einer erhöhten Streufeldabstrahlung, da erhebliche Distanzen mit einer hohen Anzahl an Leitungen zu überbrücken sind.

Der Erfindung liegt die Aufgabe zugrunde, eine platzsparende Konstruktion einer elektrischen rotierenden Maschine zu ermöglichen.

Diese Aufgabe wird durch eine elektrische rotierende Maschine gelöst, die einen Rotor, einen Stator, der radial außerhalb des Rotors angeordnet ist, ein Maschinengehäuse, in dem der Rotor und der Stator aufgenommen sind, sowie mehrere Umrichter aufweist, wobei die Umrichter radial außerhalb des Stators und innerhalb des Maschinengehäuses angeordnet sind.

Ferner wird die Aufgabe durch ein Fahrzeug, insbesondere ein Unterseeboot, mit mindestens einer derartigen elektrischen rotierenden Maschine gelöst.

Der Erfindung liegt die Überlegung zugrunde, die für den Betrieb einer elektrischen rotierenden Maschine, insbesondere eines Antriebs für ein Unterseeboot, benötigten Umrichter zwischen dem Stator und dem Maschinengehäuse anzuordnen. Insbesondere bei Unterseeboot-Antrieben mit hohen Leistungen ist an dieser Stelle genügend Platz für die Unterbringung der zum Betrieb der elektrischen rotierenden Maschine erforderlichen Umrichter vorhanden. Die Umrichter generieren aus einer Gleichspannung oder einer Wechselspannung die für den Betrieb des Schiffsantriebs benötigte Frequenz und Amplitude. Insbesondere im Vergleich zu Umrichtern, die in Schaltschränken neben der Antriebsmaschine untergebracht sind und viel Stellfläche benötigen, wird erheblich Platz eingespart. Auch im Vergleich zu einem Glockenläufer, bei dem die Umrichter innerhalb des Rotors untergebracht sind, ist der Platzbedarf geringer, da bei einer Unterbringung zwischen Maschinengehäuse und Stator kein axialer Versatz zwischen den Umrichtern und dem Stator vorhanden ist.

Gemäß einer bevorzugten Ausgestaltung sind die Umrichter um den Umfang des Stators herum angeordnet. Insbesondere bei einer gleichmäßigen Anordnung der Umrichter um den Stator herum ist die Konstruktion der elektrischen rotierenden Maschine platzsparend, da kaum ungenutzter Bauraum vorhanden ist.

Vorteilhafterweise sind die Umrichter sektorförmig um den Stator herum angeordnet. Eine sektorförmige Anordnung der Umrichter ist platzeffizient. Darüber hinaus sind die Umrichter sind einfach zu warten und einzelne Umrichter sind leicht austauschbar.

In einer bevorzugten Ausführungsform weist der Stator Statorwicklungen auf und die Umrichter sind innerhalb einer axialen Ausdehnung der Statorwicklungen angeordnet. Durch eine Anordnung der Umrichter innerhalb der axialen Ausdehnung der Statorwicklungen gibt es im Wesentlichen keinen axialen Versatz zwischen dem Stator und den Umrichtern, wodurch durch die Umrichter kein zusätzlicher axialer Bauraum benötigt wird.

Auf vorteilhafte Weise stehen die Umrichter mit dem Stator in einer wärmeleitfähigen Verbindung. Zumindest ein Teil der Entwärmung der Umrichter findet somit über den Stator statt. Daher wird Platz für Mittel zur Kühlung der Umrichter eingespart.

Bei einer weiteren vorteilhaften Ausgestaltung weist das Maschinengehäuse ein Haltegerüst zur Aufnahme der Umrichter auf. Das Haltegerüst wird beispielsweise aus einem Stahl hergestellt und ist insbesondere um die Umrichter herum angeordnet. Durch ein Haltegerüst wird die Steifigkeit der elektrischen rotierenden Maschine erhöht.

Vorteilhafterweise weist das Haltegerüst radiale Rippen auf. Die radialen Rippen sind insbesondere zwischen den Umrichtern angeordnet. Insbesondere durch die Anordnung der radialen Rippen zwischen den Umrichtern wird die elektrische rotierende Maschine platzsparend und gewichtreduziert versteift.

Gemäß einer vorteilhaften Ausführungsform ist das Haltegerüst des Maschinengehäuses mit dem Stator verbunden. Insbesondere ist das Haltegerüst über die radialen Rippen mit dem Stator verbunden. Durch die Anbindung an den Stator erhöht sich dessen Steifigkeit.

Bei einer weiteren vorteilhaften Ausführungsform weist die elektrische rotierende Maschine eine Steuervorrichtung auf, die dafür eingerichtet ist, in einem Teillastbetrieb lediglich einige der Umrichter zu betreiben. Insbesondere steuert die Steuervorrichtung den Betrieb der elektrischen Maschine. Beispielsweise wird durch die Steuervorrichtung festgelegt, welche Umrichter im Betrieb der elektrischen Maschine eingeschaltet werden. Dabei werden im Teillastbetrieb insbesondere lediglich ein Teil der Umrichter betrieben und in einem Volllastbetrieb werden insbesondere alle Umrichter betrieben. Unter Volllastbetrieb wird hierbei ein Betrieb mit der maximalen erreichbaren Leistung verstanden. Der Vorteil der verschiedenen Betriebsmodi ist, dass die Umrichter immer im optimalen Betriebsmodus laufen.

In einer weiteren vorteilhaften Ausgestaltung ist mindestens ein weiterer Umrichter außerhalb des Maschinengehäuses angeordnet. Insbesondere ist der weitere Umrichter im Hinblick auf eine besonders platzsparende Lösung am äußeren Umfang des Maschinengehäuses angeordnet. Aufgrund einer guten Zugänglichkeit wird der äußere Umfang des Maschinengehäuses ohnehin zur Anbringung von Komponenten, die für den Betrieb der elektrischen Maschinen erforderlich sind, genutzt, beispielsweise für die Regelung und Steuerung der Umrichter. Der vorhandene freie Platz am äußeren Umfang eignet sich somit bestens für die Aufnahme der weiteren Umrichter und bietet Flexibilität bei der Wahl der genauen Position des mindestens einen weiteren Umrichters, ohne dass dabei der Durchmesser des Maschinengehäuses vergrößert wird.

Zweckdienlicherweise ist die Steuervorrichtung dafür eingerichtet, zuerst die Umrichter innerhalb des Maschinengehäuses zu betreiben. Insbesondere Umrichter, die für einen selten benötigten Betriebsmodus, beispielsweise den Volllastbetrieb, vorgesehen sind, sind außerhalb des Maschinengehäuses angeordnet. Ein Vorteil durch die Inbetriebnahme zuerst der innerhalb des Maschinengehäuses befindlichen Umrichter ist, dass eine Störstrahlung, insbesondere eine elektromagnetische Störstrahlung, welche durch den Betrieb der Umrichter entsteht, durch das Maschinengehäuse abgeschirmt wird. Lediglich im Volllastbetrieb werden die insbesondere außerhalb des Maschinengehäuses befindlichen weiteren Umrichter zusätzlich zu den innerhalb des Maschinengehäuses liegenden Umrichtern zugeschaltet, so dass zusätzliche Störstrahlung über einen kurzen Zeitraum generiert wird.

Ausführungsbeispiele der Erfindung werden anhand von Zeichnungen näher erläutert. Hierhin zeigen stark vereinfacht:
- FIG 1: einen Längsschnitt einer ersten Ausführungsform einer elektrischen rotierenden Maschine,
- FIG 2: einen Längsschnitt einer zweiten Ausführungsform der elektrischen rotierenden Maschine,
- FIG 3: einen dreidimensionalen Querschnitt einer dritten Ausführungsform der elektrischen rotierenden Maschine,
- FIG 4: einen Längsschnitt einer vierten Ausführungsform der elektrischen rotierenden Maschine,
- FIG 5: einen Längsschnitt einer fünften Ausführungsform der elektrischen rotierenden Maschine und
- FIG 6: einen Längsschnitt eines Unterseeboots.

Gleiche Bezugszeichen haben in den verschiedenen Figuren die gleiche Bedeutung.

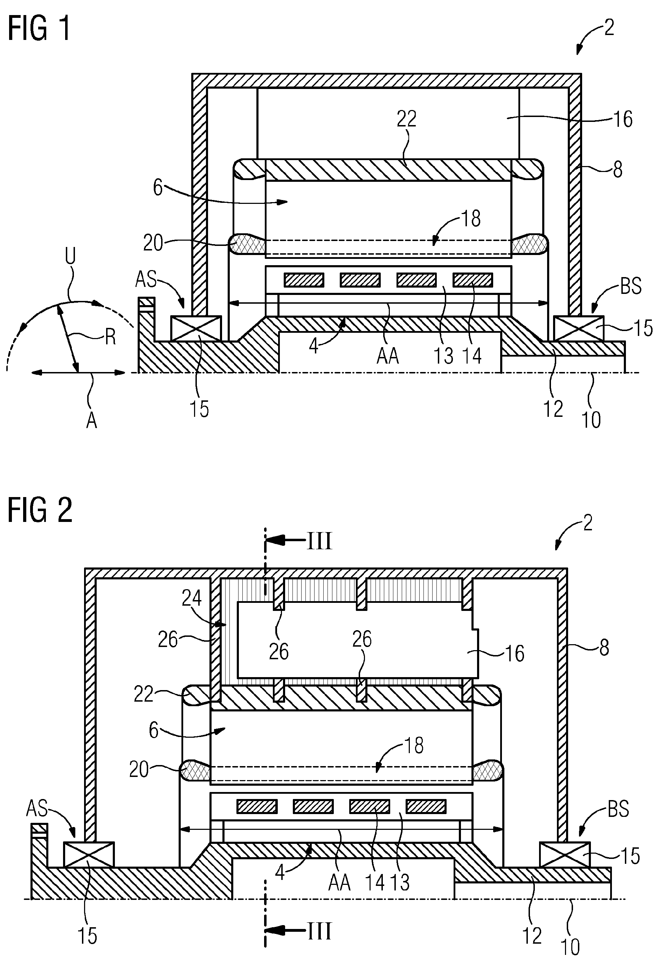

FIG 1 zeigt einen Längsschnitt einer ersten Ausführungsform einer elektrischen rotierenden Maschine 2, insbesondere eines elektrischen Motors, der einen Rotor 4 sowie einen den Rotor umgebenden Stator 6 umfasst. Der Rotor 4 und der Stator 6 sind in einem Maschinengehäuse 8 untergebracht. Der Rotor 4 weist eine Rotationsachse 10 auf, die eine Axialrichtung A, eine Radialrichtung R und eine Umfangsrichtung U definiert. Ferner umfasst der Rotor eine Antriebswelle 12, auf der ein Polrad 13 mit Permanentmagneten 14 befestigt ist. Die Antriebswelle 12 ist über jeweils mindestens ein Lager 15 an einer Antriebsseite AS und an einer Nichtantriebsseite BS der elektrischen rotierenden Maschine 2 gelagert ist. Die elektrische rotierende Maschine ist hierbei für den Antrieb eines Unterseeboots mit einer Leistung von mindestens einem Megawatt vorgesehen.

Mehrere Umrichter 16 sind außerhalb des Stators 6 und innerhalb des Maschinengehäuses 8 angeordnet, wobei die Umrichter 16 sektorförmig um den Stator 6 herum angeordnet sind.

Der Stator 6 weist Statorwicklungen 18 mit Wickelköpfen 20 auf, wobei die Wickelköpfe 20 die Statorwicklungen 18 in einer axialen Ausdehung AA begrenzen. Die Umrichter 16 sind innerhalb der axialen Ausdehnung AA der Statorwicklungen 18 angeordnet.

Ferner weist der Stator 6 einen Kühlring 22 auf, der zur Kühlung des Stators 6 mit einem Kühlmittel, insbesondere einem Kühlmittelfluid, vorgesehen ist. Darüber hinaus stehen die Umrichter 16 mit dem Kühlring 22 des Stators 6 in einer wärmeleitfähigen Verbindung, sodass die Umrichter 16 zumindest teilweise durch den Kühlring 22 gekühlt werden.

FIG 2 zeigt einen Längsschnitt einer zweiten Ausführungsform der elektrischen rotierenden Maschine 2. Das Maschinengehäuse 8 der elektrischen rotierenden Maschine 2 weist ein Haltegerüst 24 zur Aufnahme der Umrichter 16 auf, wobei das Haltegerüst 24 mit dem Stator 6 mechanisch verbunden ist. Die Steifigkeit des Stators 6 wird durch die Anbindung des Haltegerüsts 24 an den Stator 6 erhöht. Darüber hinaus weist das Haltegerüst 24 radiale Rippen 26 auf, die zusätzlich für mehr Steifigkeit sorgen. Die weitere Ausführung der elektrischen rotierenden Maschine 2 entspricht der in FIG 1.

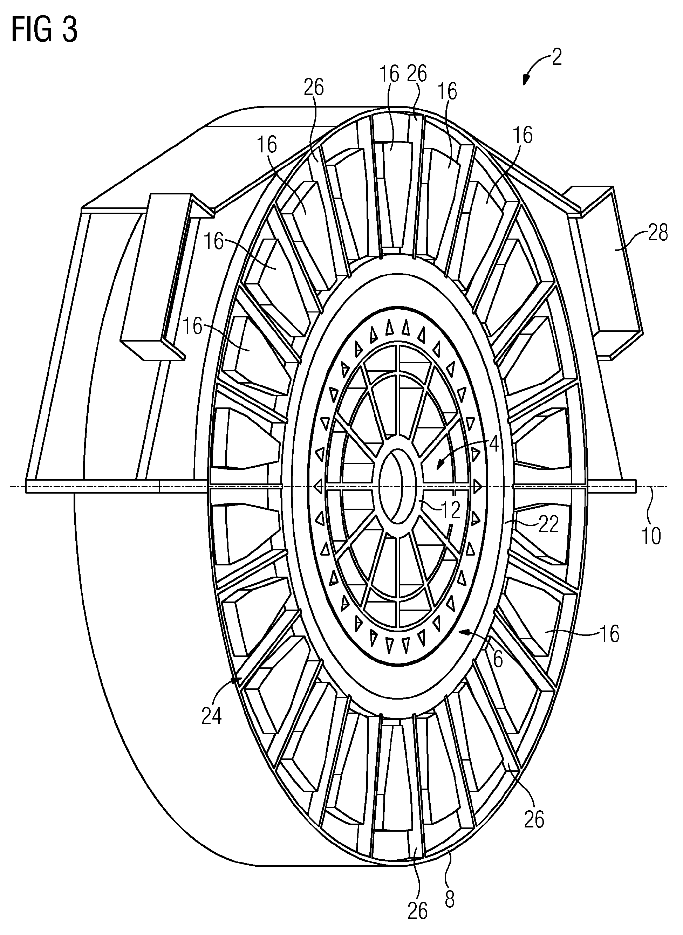

FIG 3 zeigt einen dreidimensionalen Querschnitt einer dritten Ausführungsform der elektrischen rotierenden Maschine 2. Im gezeigten Ausführungsbeispiel sind exemplarisch zweiundzwanzig Umrichter 16 sektorförmig um den Stator 6 herum innerhalb des Maschinengehäuses 8 positioniert. Die radialen Rippen 26 des Haltegerüsts 24 befinden sich zwischen den Umrichtern 16. Eine symbolisch dargestellte Steuervorrichtung 28 steuert beziehungsweise regelt den Betrieb der elektrischen rotierenden Maschine 2. Unter anderem wird durch die Steuervorrichtung 28 festgelegt, welche Umrichter 16 im Betrieb der elektrischen rotierenden Maschine 2 eingeschaltet werden. Die elektrische rotierende Maschine 2 wird in einem Volllastbetrieb oder in mindesten einem Teillastbetrieb betrieben, wobei im mindestens einen Teillastbetrieb lediglich ein Teil der Umrichter 16 eingeschaltet wird. Unter dem Volllastbetrieb wird hierbei ein Betrieb mit der maximalen erreichbaren Leistung verstanden. Im Volllastbetrieb werden alle Umrichter eingeschaltet. Die weitere Ausführung der elektrischen rotierenden Maschine 2 entspricht der in FIG 2.

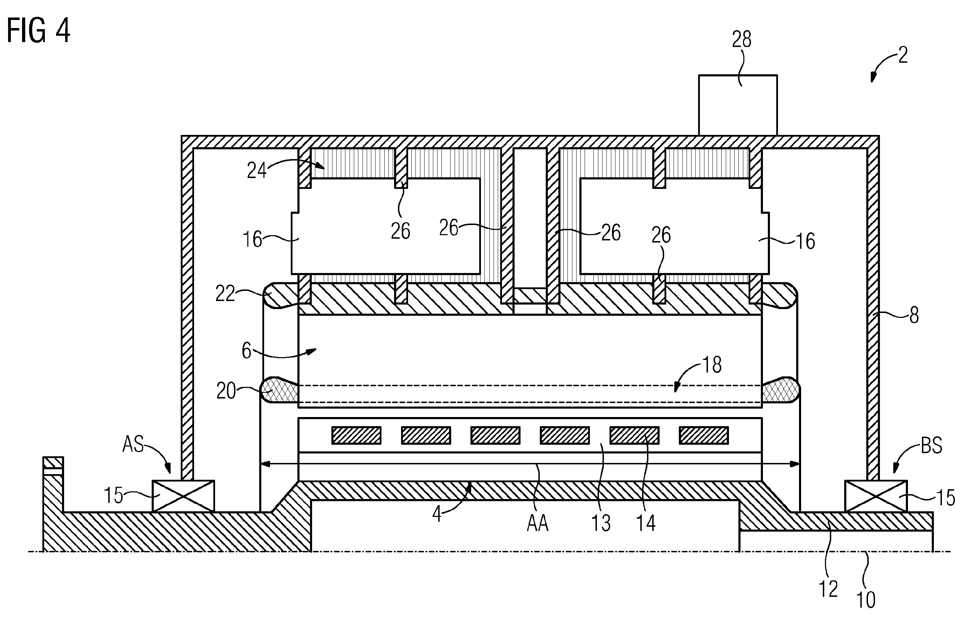

FIG 4 zeigt einen Längsschnitt einer vierten Ausführungsform der elektrischen rotierenden Maschine 2. Der Stator 6 der in FIG 4 gezeigten elektrischen rotierenden Maschine 2 weist eine größere axiale Länge als die Statoren 6 der in den FIG 1 bis FIG 3 gezeigten elektrischen rotierenden Maschinen 2 auf, um bei einem geringeren Durchmesser mit derselben Leistung von mindestens einem Megawatt betrieben werden zu können. durch den geringeren Durchmesser werden insbesondere die Fliehkräfte am Rotor 4 geringer, was eine einfachere und günstigere Befestigung für die Permanentmagnete 14 auf dem Polrad 13 ermöglicht.

Aufgrund der größeren axialen Länge des Stators 6 werden jeweils zwei Umrichter 16 in Axialrichtung hintereinander angeordnet, wobei die Umrichter von der Antreibsseite AS und von der Nichtantreibsseite BS der elektrischen rotierenden Maschine 2 montiert werden. Sind nicht alle Umrichter 16 für den Betrieb der elektrischen rotierenden Maschine 2 erforderlich, so kann nicht benötigter Platz im Haltegerüst 24 zur Unterbringung von zusätzlichen Komponenten, beispielsweise Pumpen und/oder Steuermodulen, verwendet werden. Die weitere Ausführung der elektrischen rotierenden Maschine 2 entspricht der in FIG 3.

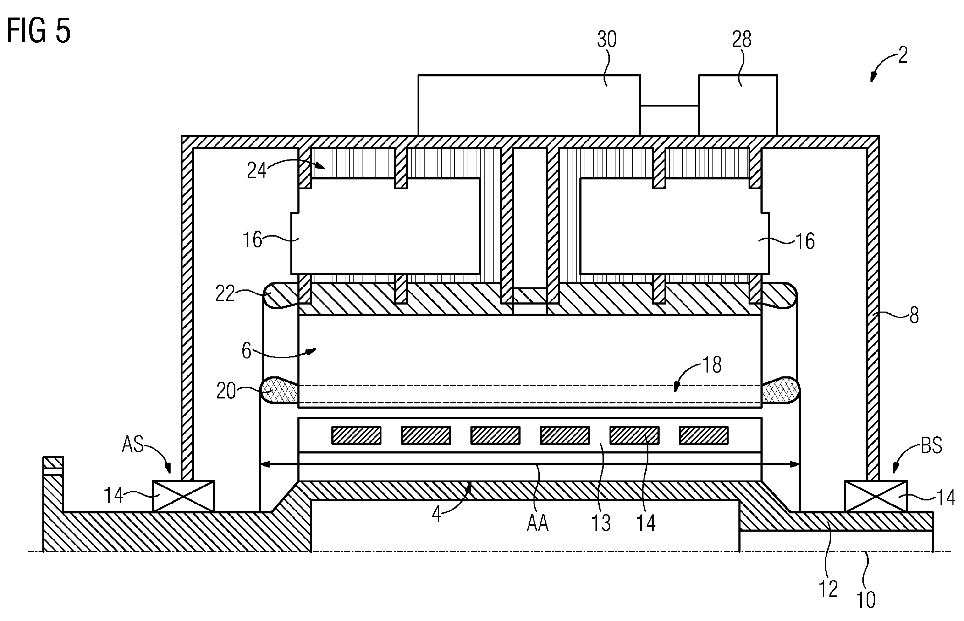

FIG 5 zeigt einen Längsschnitt einer fünften Ausführungsform der elektrischen rotierenden Maschine. Exemplarisch ein weiterer Umrichter 30 befindet sich außerhalb des Maschinengehäuses 8, der ebenfalls von der Steuervorrichtung 28 eingeschaltet und ausgeschaltet wird. Der weitere Umrichter 30 wird für einen selten benötigten Betriebsmodus, beispielsweise einen Volllastbetrieb, benötigt. Lediglich im Volllastbetrieb wird der weitere Umrichter 30, der sich außerhalb des Maschinengehäuses 8 befindet, zusätzlich zu den innerhalb des Maschinengehäuses 8 liegenden Umrichtern 16 zugeschaltet. Die weitere Ausführung der elektrischen rotierenden Maschine 2 entspricht der in FIG 4.

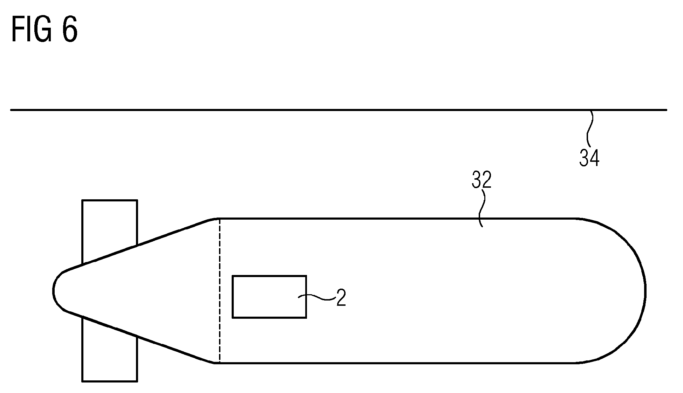

FIG 6 zeigt einen Längsschnitt eines Unterseeboots 32, das eine elektrische rotierende Maschine 2 aufweist. Das Unterseeboot 32 befindet sich unterhalb einer Wasseroberfläche 34.

## Patentansprüche

1. Elektrische rotierende Maschine (2) mit
- einem Rotor (4),
- einem Stator (6), der radial außerhalb des Rotors (4) angeordnet ist,
- einem Maschinengehäuse (8), in dem der Rotor (4) und der Stator (6) aufgenommen sind, sowie
- mehreren Umrichtern (16),
**dadurch gekennzeichnet, dass** die Umrichter (16) radial außerhalb des Stators (6) und innerhalb des Maschinengehäuses (8) angeordnet sind.

2. Elektrische rotierende Maschine (2) nach Anspruch 1,
wobei die Umrichter (16) um den Umfang des Stators (6) herum angeordnet sind.

3. Elektrische rotierende Maschine (2) nach Anspruch 2,
wobei die Umrichter (16) sektorförmig um den Stator (6) herum angeordnet sind.

4. Elektrische rotierende Maschine (2) nach einem der vorherigen Ansprüche,
wobei der Stator (6) Statorwicklungen (18) aufweist und die Umrichter (16) innerhalb einer axialen Ausdehnung der Statorwicklungen (18) angeordnet sind.

5. Elektrische rotierende Maschine (2) nach einem der vorherigen Ansprüche,
wobei die Umrichter (16) mit dem Stator (6) in einer wärmeleitfähigen Verbindung stehen.

6. Elektrische rotierende Maschine (2) nach einem der vorherigen Ansprüche,
wobei das Maschinengehäuse (8) ein Haltegerüst (24) zur Aufnahme der Umrichter (16) aufweist.

7. Elektrische rotierende Maschine (2) nach Anspruch 6, wobei das Haltegerüst (24) radiale Rippen (26) aufweist.

8. Elektrische rotierende Maschine (2) nach einem der Ansprüche 6 oder 7,
wobei das Haltegerüst (24) des Maschinengehäuses (8) mit dem Stator (6) verbunden ist.

9. Elektrische rotierende Maschine (2) nach einem der vorherigen Ansprüche,
aufweisend eine Steuervorrichtung (28), die dafür eingerichtet ist, in einem Teillastbetrieb lediglich einige der Umrichter (16) zu betreiben.

10. Elektrische rotierende Maschine (2) nach einem der vorherigen Ansprüche,
wobei mindestens ein weiterer Umrichter (30) außerhalb des Maschinengehäuses (8) angeordnet ist.

11. Elektrische rotierende Maschine (2) nach Anspruch 9 und 10,
wobei die Steuervorrichtung (28) dafür eingerichtet ist, zuerst die Umrichter (16) innerhalb des Maschinengehäuses (8) zu betreiben.

12. Fahrzeug, insbesondere ein Unterseeboot (32), mit mindestens einer elektrischen rotierenden Maschine (2) nach einem der Ansprüche 1 bis 11.
